# EUROPÄISCHE PATENTANMELDUNG

(11) **EP 4 484 062 A1**
(43) Veröffentlichungstag der Anmeldung: **01.01.2025**
(21) Anmeldenummer: 24178554.2
(22) Anmeldetag: 28.05.2024
(51) Int. Cl.: B25B 27/00, B21J 15/10, B25B 27/10, B25F 3/00

(54) **HANDHALTBARE ZUG- UND DRUCKVORRICHTUNG SOWIE MODULARES SYSTEM**

(30) Priorität: 26.06.2023 DE 102023116744
(71) Anmelder: TKR Spezialwerkzeuge GmbH, 58285 Gevelsberg (DE)
(72) Erfinder: Kreischer, Torsten, 58300 Wetter (DE)
(74) Vertreter: Kalkoff & Partner Patentanwälte mbB

(57) **Zusammenfassung**

Die Erfindung betrifft eine handhaltbare Zug- und Druckvorrichtung zum Antrieb von auswechselbaren Werkzeugen. Um eine handhaltbare Zug- und Druckvorrichtung bereitzustellen, die einfach und flexibel für unterschiedliche Arbeitsgänge einsetzbar ist, ist vorgesehen, dass die Zug- und Druckvorrichtung eine Werkzeugeinheit mit einem Gewindetrieb und einer Werkzeugaufnahme aufweist. Der Gewindetrieb weist eine verdrehbar an einem Gehäusekörper gelagerte Gewindespindel und eine verdrehbar auf der Gewindespindel und über eine Lagereinheit verdrehfest an dem Gehäusekörper gelagerte Gewindemutter auf. Darüber hinaus weist die Zug- und Druckvorrichtung eine über eine Kupplung mit der Werkzeugeinheit verbindbare Antriebseinheit mit einem akkubetriebenen Elektromotor zum Antrieb der Gewindespindel auf.

## Beschreibung

Die Erfindung betrifft eine handhaltbare Zug- und Druckvorrichtung zum Antrieb von auswechselbaren Werkzeugen.

Handhaltbare Zug- und Druckvorrichtungen, d.h. solche Vorrichtung die sich von einer Person mobil einsetzen lassen, wie bspw. handhaltbare, elektrische Niet- und Pressvorrichtungen zum Setzen von Blindnietelementen, wie Blindnieten und Blindnietmuttern, oder zum Durchführen von Stanzprozessen sowie zum Setzen von Stanznieten, die eine Antriebseinheit mit einer elektromotorisch angetriebenen Gewindespindel eines Gewindetriebs aufweisen, sind in vielfältigen Ausgestaltungen aus dem Stand der Technik bekannt. Über den Gewindetrieb erfolgt dabei in bekannter Weise eine Umwandlung einer Drehbewegung des Elektromotors in eine lineare Bewegung des Zieh- oder Presswerkzeugs. Im Falle der Durchführung des Setzvorgangs eines Blindnietelements wird bspw. ein Zugdorn des Blindnietelements axial bewegt.

Die vorbeschriebenen handhaltbaren Zug- und Druckvorrichtungen kommen bspw. in Kraftfahrzeugwerkstätten im Rahmen der Durchführung von Reparaturarbeiten an der Karosserie von Fahrzeugen sowie bei Instandhaltungsarbeiten von Rohr- oder Kabelverbindungen zum Einsatz. In Abhängigkeit von den durchzuführenden Arbeiten ist es dabei erforderlich, mit den Zug- und Druckvorrichtungen eine Vielzahl unterschiedlichster auswechselbarer Werkzeuge, beispielsweise mit unterschiedlich hohen Kräften.

Bekannte handhaltbare Vorrichtungen, die sowohl den Betrieb von Zieh- als auch Presswerkzeugen ermöglichen, weisen den Nachteil auf, dass ihre Einsatzmöglichkeiten durch die Auslegung der Vorrichtung, insbesondere des Gewindetriebs und/oder der Antriebseinheit, eingeschränkt sind.

Hiervon ausgehend liegt der Erfindung die Aufgabe zugrunde, eine handhaltbare Zug- und Druckvorrichtung bereitzustellen, die einfach und flexibel für unterschiedliche Arbeitsgänge einsetzbar ist.

Die Erfindung löst die Aufgabe durch eine handhaltbare Zug- und Druckvorrichtung mit den Merkmalen des Anspruchs 1 sowie durch ein modulares System mit den Merkmalen des Anspruchs 8. Vorteilhafte Weiterbildungen der handhaltbare Zug- und Druckvorrichtung sind in den Ansprüchen 2 bis 7 angegeben.

Die erfindungsgemäße handhaltbare Zug- und Druckvorrichtung weist eine Werkzeugeinheit mit einem Gewindetrieb und einer Werkzeugaufnahme auf. Der Gewindetrieb weist eine verdrehbar an einem Gehäusekörper gelagerte Gewindespindel und eine verdrehbar auf der Gewindespindel und über eine Lagereinheit verdrehfest an dem Gehäusekörper gelagerte Gewindemutter auf. Erfindungsgemäß weist die Zug- und Druckvorrichtung eine über eine Kupplung mit der Werkzeugeinheit verbindbare Antriebseinheit mit einem akkubetriebenen Elektromotor zum Antrieb der Gewindespindel auf.

Die Werkzeugeinheit ist über eine Kopplungseinheit mit einer Werkzeugaufnahme verbunden, die zur auswechselbaren Aufnahme unterschiedlicher, für den jeweiligen Einsatzzweck erforderlicher Werkzeuge, beispielsweise Zieh- und Presswerkzeuge und/oder Rotationswerkzeug ausgebildet ist. So kann die Werkzeugaufnahme bei der Verwendung als Druckvorrichtung beispielsweise zur Aufnahme eines Nietdöppers ausgebildet sein, welcher in Verbindung mit einem an der Druckvorrichtung angeordneten Nietbügel zum Setzen von Nieten zum Einsatz kommt. Bei der Verwendung als Zugvorrichtung kann die Werkzeugaufnahme beispielsweise mit geeigneten Klemmvorrichtungen für einen Blindnietschaft versehen sein oder andere Zugkräfte übertragende Mittel aufweisen. Alternativ oder ergänzend kann die Werkzeugaufnahme auch zur Aufnahme entsprechender Ziehwerkzeuge ausgebildet sein, wobei die Ziehwerkzeuge beispielsweise Klemmmitte, mittels derer dann die Zugkräfte übertragen werden können, aufweisen.

Die Kopplungseinheit ist derart mit der Gewindemutter verbunden, dass sowohl Zugals auch Druckkräfte, welche aus der Bewegungsrichtung der Gewindespindel und der sich daraus ergebenden linearen Verstellung der Gewindemutter ergeben, zuverlässig auf die Kopplungseinheit übertragen werden.

Der Elektromotor und der Akku zum Betreiben des Elektromotors sind bevorzugt in einem über die Kupplung mit dem Gehäusekörper der Werkzeugeinheit verbindbaren Grundkörper angeordnet. Die Kupplung ist besonders bevorzugt derart ausgebildet, dass das von der Antriebseinheit erzeugte Drehmoment bei einer an der Werkzeugeinheit festgelegten Antriebseinheit auf den Gewindetrieb übertragen wird.

Die erfindungsgemäße Zug- und Druckvorrichtung erlaubt es in Abhängigkeit von den durchzuführenden Arbeiten, beispielsweise im Rahmen ihres Einsatzes in einer Kraftfahrzeugwerkstatt bei der Durchführung von Karosseriearbeiten, unterschiedlich ausgebildete Werkzeugeinheiten mit der Antriebseinheit zu verbinden. Die erfindungsgemäß vorgesehene Kupplung erlaubt eine einfache und standardisierte Verbindung der verschiedenen für die unterschiedlichen Arbeiten optimierten Werkzeugeinheiten mit der Antriebseinheit sowie im Wartungsfall einen einfach und schnellen Austausch der Werkzeugeinheit und/oder der Antriebseinheit. Die durch die Verbindung der Antriebseinheit mit einer Werkzeugeinheit gebildete Zug- und Druckvorrichtung erlaubt wahlweise sowohl die Durchführung von Zieh- als auch Pressarbeiten, beispielsweise das Setzen von Blindnieten oder das Durchführen von Stanzarbeiten. Die für den jeweiligen Arbeitsgang erforderliche lineare Verstellung des ausgewählten Werkzeugs wird dabei zuverlässig über die Kopplungseinheit auf die Werkzeugaufnahme übertragen, nachdem die Kopplungseinheit sowohl Zug- als auch Druckkräfte von der Gewindemutter über die Werkzeugaufnahme auf das jeweilige Werkzeug überträgt.

Nach einer vorteilhaften Weiterbildung der Erfindung ist vorgesehen, dass die Kupplung eine Datenleitung und eine Stromversorgung aufweist. Die Datenleitung ermöglicht die Übertragung von Daten zwischen der Antriebseinheit und der Werkzeugeinheit. Als Daten werden beispielsweise von der Werkzeugeinheit erfasste Messwerte an die Antriebseinheit oder von der Antriebseinheit Informationen für verschiedene Arbeitsgänge, beispielsweise Verfahrwege des Gewindetriebs oder der Werkzeugaufnahme an die Werkzeugeinheit übertragen. Die Stromversorgung stellt darüber hinaus sicher, dass die Werkzeugeinheit durch die Antriebseinheit mit Strom versorgt ist. Beispielsweise ermöglicht die Stromversorgung, dass ein Werkzeug mit einem Magnetverschluss an der Werkzeugeinheit anordbar und mit dieser betreibbar ist.

Die Festlegung der Werkzeugeinheit an dem Grundkörper der Antriebseinheit kann dabei grundsätzlich in beliebiger Weise erfolgen. Denkbar ist hier bspw. ein an dem Gehäusekörper der Werkzeugeinheit angeordneter Anschlussabschnitt, welcher zum Beispiel als Gewinde ausgebildet ist, welches es ermöglicht, die Werkzeugeinheit mit korrespondierenden Gewinden an einem Verbindungsabschnitt des Grundkörpers der Antriebseinheit festzulegen. Nach einer vorteilhaften Ausgestaltung der Erfindung ist vorgesehen, dass die Kupplung zur Verbindung der Antriebseinheit mit der Werkzeugeinheit als elektrische und/oder mechanische Kupplung ausgebildet ist. Beispielsweise ist die Kupplung als mechanischer Bajonettverschluss oder als Kugelverriegelung ausgebildet. Die Kupplung ist unabhängig von der Ausbildung als elektrische oder mechanische Kupplung bevorzugt zwischen einer Verriegelungsstellung und einer Entriegelungsstellung verstellbar. In der Verriegelungsstellung sind die Werkzeugeinheit und die Antriebseinheit bevorzugt derart miteinander verbunden, dass das von der Antriebseinheit erzeugte Drehmoment auf die Werkzeugeinheit, beispielsweise die Gewindespindel des Gewindetriebs übertragen wird. In der Entriegelungsstellung sind die Werkzeugeinheit und die Antriebseinheit voneinander trennbar, sodass bei Bedarf ein einfacher und flexibler Austausch der Werkzeugeinheit oder der Antriebseinheit erfolgen kann.

Bevorzugt ist die Kupplung als Schnellkupplung ausgebildet. Die Verwendung einer Schnellkupplung, welche dadurch gekennzeichnet ist, dass diese durch den Bediener mit nur geringem Aufwand schnell zwischen der Entriegelungsstellung, in der die Werkzeugeinheit an der Antriebseinheit angeordnet bzw. von diesem entnommen werden kann, und der Verriegelungsstellung, in der die Werkzeugeinheit ortsfest an der Antriebseinheit festgelegt ist, verstellt werden kann. Die Schnellkupplung zeichnet sich insbesondere dadurch aus, dass auf zusätzliche Werkzeuge zur Entnahme bzw. Anordnung der Werkzeugeinheit verzichtet werden kann. Eine Ausgestaltung der handhaltbaren Zug- und Druckvorrichtung mit einer Schnellkupplung ermöglicht somit einen schnellen und komfortablen Wechsel bzw. eine Montage und Demontage einer Werkzeugeinheit an bzw. von der Zug- und Druckvorrichtung.

Eine Verstellung der Schnellkupplung zwischen der Entriegelungs- und Verriegelungsstellung kann dabei grundsätzlich in beliebiger Weise erfolgen, bspw. kann die Schnellkupplung derart ausgestaltet sein, dass diese mechanisch durch einen Bediener zwischen der Entriegelungs- und Verriegelungsstellung verstellt werden kann. Besonders bevorzugt ist die Schnellkupplung mittels der Antriebseinheit zwischen der Entriegelungs- und Verriegelungsstellung verstellbar. Die Verwendung der Antriebseinheit zur Bedienung der Schnellkupplung, d. h. zu deren Verstellung zwischen der Entriegelungs- und Verriegelungsstellung erhöht den Komfort der handhaltbaren Zug- und Druckvorrichtung in besonderer Weise. Fehlbedienungen der Schnellkupplungen werden durch die Bedienung mittels der Antriebseinheit darüber hinaus in ergänzender Weise minimiert bzw. vollständig vermieden.

Nach einer vorteilhaften Weiterbildung der Erfindung ist vorgesehen, dass die Werkzeugeinheit eine zwischen einer die Gewindespindel, insbesondere bei der in der Verriegelungsstellung angeordneten Kopplung, mit der Antriebseinheit verbindenden Kopplungsstellung und einer die Gewindespindel von der Antriebseinheit trennenden Entkopplungsstellung verstellbare Schalteinheit aufweist. In der Kopplungsstellung ist der Gewindetrieb bevorzugt über die Schalteinheit derart mit der Antriebseinheit verbunden, dass Drehbewegungen des Elektromotors auf die Gewindespindel übertragen werden. In der Entkopplungsstellung ist der Gewindetrieb bevorzugt durch die Schalteinheit derart von der Antriebseinheit getrennt, dass die Drehbewegung des Elektromotors nicht auf die Gewindespindel übertragen wird. Die Verstellung der Schalteinheit zwischen den Stellungen erfolgt beispielsweise manuell, zum Beispiel durch einen Nutzer, oder automatisch, zum Beispiel durch eine Steuereinheit. Die Schalteinheit ermöglicht auch bei einer in der Verriegelungsstellung angeordneten Kupplung auf einfache Weise das Entkoppeln des Gewindetriebs von der Antriebseinheit, wodurch die Drehbewegung des Elektromotors nicht an die Gewindespindel übertragen und somit die lineare Verstellung der Gewindemutter und/oder der Kopplungseinheit und/oder der Werkzeugsaufahme blockiert ist.

Nach einer vorteilhaften Ausgestaltung der Erfindung ist vorgesehen, dass die Gewindespindel und/oder die Schalteinheit und/oder die Rotationswelle zur formschlüssigen Verbindung mit einer Antriebswelle der Antriebseinheit ausgebildet ist. Bevorzugt weisen die die Rotationswelle und die Schalteinheit mindestens einen Kopplungsabschnitt zur formschlüssigen Verbindung mit der Antriebswelle auf. Die Gewindespindel ist vorzugsweise mittelbar über die Schalteinheit mit der Antriebswelle verbindbar.

Die Rotationswelle weist bevorzugt mindestens einen ersten Kopplungsabschnitt auf, welcher besonders bevorzugt mit einem an der Antriebswelle angeordneten Koppelabschnitt in Eingriff bringbar ist.

Der erste Kopplungsabschnitt und/oder der Koppelabschnitt sind bevorzugt derart ausgebildet, dass der Verriegelungsstellung ein Formschluss zwischen der Rotationswelle und der Antriebseinheit in Umfangsrichtung der Längsachse der Antriebswelle erzeugt ist. Vorzugsweise ist die Schalteinheit formschlüssig, beispielsweise über einen als Passfeder oder eine passfederähnliche Verbindung ausgebildeten zweiten Kopplungsabschnitt mit der Antriebswelle der Antriebseinheit verbunden.

Der Koppelabschnitt ist bevorzugt an einem Endabschnitt der Antriebswelle angeordnet. Der Endabschnitt der Antriebswelle beschreibt einen sich von einer Stirnfläche der Antriebswelle in Richtung der Längsachse der Antriebswelle erstreckenden Abschnitt. Vorzugsweise sind der erste Kopplungsabschnitt als ein von einer der Antriebseinheit zugewandten Stirnfläche der Rotationswelle vorstehender Vorsprung und der Koppelabschnitt als eine Vertiefung der Stirnfläche der Antriebswelle ausgebildet.

Die vorteilhaft an der Rotationswelle und/oder der Schalteinheit vorgesehenen Kopplungsabschnitte sowie der vorzugsweise an der Antriebswelle vorgesehene Koppelabschnitt ermöglichen auf einfache Weise die Festlegung der Rotationswelle und/oder der Schalteinheit und/oder des Gewindetriebs an Antriebseinheit und durch den Formschluss in Umfangsrichtung der Antriebswelle eine besonders zuverlässige Übertragung der Drehbewegung der Antriebseinheit auf die Werkzeugeinheit.

Vorzugsweise ist der Gewindetrieb der Werkzeugeinheit derart ausgebildet, dass eine Rotationswelle zur Übertragung von Drehbewegungen des Elektromotors auf ein Werkzeug an dem Elektromotor anordbar ist. Nach einer vorteilhaften Weiterbildung der Erfindung ist vorgesehen, dass die Gewindespindel als Hohlspindel zur Aufnahme einer mit der Antriebseinheit verbindbaren Rotationswelle ausgebildet ist. Unter einer Hohlspindel wird eine Gewindespindel mit einem sich in Längsachsenrichtung der Gewindespindel erstreckenden Hohlraum verstanden. Die Rotationswelle ist vorzugsweise derart mit dem Elektromotor verbindbar, dass die Rotationswelle unabhängig von der in der Kopplungsstellung oder in der Entkopplungsstellung angeordneten Schalteinheit drehbar ist. Bevorzugt ist die Rotationswelle koaxial zu der Hohlspindel angeordnet. Besonders bevorzugt ist die Rotationswelle um die Längsachse der Hohlspindel drehbar in der Hohlspindel gelagert. Beispielsweise ist zum Lagern der Rotationswelle mindestens ein Lagerelement, z.B. ein Wälzlager, beispielsweise ein Nadelkranz oder ein Kugellager vorgesehen. Besonders bevorzugt ist die Werkzeugaufnahme ebenfalls hohl ausgebildet, um eine Verbindung eines Rotationswerkzeugs mit der Rotationswelle ohne einen vorherigen Ausbau der mit der Kopplungseinheit verbundenen Werkzeugaufnahme zu ermöglichen.

Die Ausbildung der Gewindespindel als Hohlspindel ermöglicht auf einfache Weise die Anordnung der Rotationswelle an der Antriebseinheit, sodass die Rotationswelle unabhängig von der Stellung der Schalteinheit rotierbar ist. Hierdurch wird ein einfacher Wechsel zwischen der Übertragung von Zug- und/oder Druckkräften über die Werkzeugaufnahme und der Übertragung von Drehbewegungen durch die Rotationswelle ermöglicht. Ferner kann auf eine mit der Gewindespindel verbundene weitere Werkzeugaufnahme zum Austausch gegenüber der mit der Kopplungseinheit verbundenen Werkzeugaufnahme verzichtet werden. Darüber hinaus ist die von der Rotationswelle auf ein Werkzeug übertragene Drehbewegung nicht durch den Hub der Gewindemutter und/oder der Werkzeugaufnahme eingeschränkt, sodass die handhaltbare Zug- und Druckvorrichtung besonders flexibel einsetzbar ist.

Die Übertragung des Drehmoments der Antriebseinheit auf die Werkzeugeinheit, insbesondere die Schalteinheit und/oder die Gewindespindel und/oder die Rotationswelle kann grundsätzlich in beliebiger Weise erfolgen. Bevorzugt ist vorgesehen, dass die Antriebseinheit ein mit dem Elektromotor verbundenes Getriebe aufweist, welches die mit der Werkzeugeinheit verbindbare Antriebswelle aufweist. Die Verwendung eines Getriebes erlaubt es, hohe Drehmomente bei geringem Bauraum und Gewicht zu übertragen.

Als Getriebe kommen bspw. zwei- bis dreistufige Planetengetriebe aber auch Zykloidsowie Stirnradgetriebe zum Einsatz, welche die gewünschten Übersetzungen bieten. Die Drehzahl des Elektromotors beträgt vorzugsweise 25000 - 30000 U/min, bevorzugt 26000 - 29000 U/min, besonders bevorzugt 27000-28000 U/min, ganz besonders bevorzugt 27500 U/min. In Kombination mit vorzugsweise vorgesehenen Brushless-Motoren, welche akkubetrieben sind, kann eine optimale Abstimmung zwischen Getriebe, Gewindespindel und der daraus resultierenden Kraft vorgenommen werden. Ferner sind die Antriebseinheit, insbesondere der Elektromotor und/oder das Getriebe, derart gebildet, dass an die Werkzeugeinheit, insbesondere die Gewindespindel und/oder die Rotationswelle ein Drehmoment von 10- 100 Nm, bevorzugt 15- 95 Nm, ganz besonders bevorzugt 15- 25 Nm und/oder 75 - 95 Nm übertragbar ist.

In der einfachsten Ausgestaltung der Antriebseinheit ist der Elektromotor derart bedienbar, dass lediglich die Drehrichtung der Antriebswelle wählbar ist. Besonders bevorzugt weist die Antriebseinheit eine mit mindestens einer Sensoreinheit verbundene Steuereinheit zur Steuerung und/oder Archivierung der Betriebsvorgänge auf.

Die Verwendung einer Steuereinheit erlaubt eine gezielte Steuerung der entsprechenden Betriebsvorgänge, beispielsweise Zieh-, Press- und/oder Drehvorgänge sowie zum Beispiel die Verstellung der Kupplung zwischen der Entriegelungsstellung und der Verriegelungsstellung. So lassen sich über die Steuereinheit bspw. die jeweils vorgesehenen Zug- oder Druckkräfte in besonders einfacher Weise einstellen, sodass die Betriebsvorgänge besonders zuverlässig ausgeführt werden können. Bevorzugt ist über die Steuereinheit eine automatische Verstellung der Schalteinheit und der Kupplung, insbesondere der Schnellkupplung durchführbar. Dies ermöglicht zum einen eine besonders einfache und flexible Montage und Demontage der Werkzeugeinheit von der Antriebseinheit und zum anderen die Programmierung komplexerer Vorgänge, bei denen unterschiedliche Arbeitsgänge, beispielsweise unter Verwendung von Zug- und Druckkräften oder Drehmomenten, nacheinander oder in beliebiger Kombination durchführbar sind. Beispielsweise wird eine Blindnietmutter zunächst durch das über die Rotationswelle übertragene Drehmoment in das dafür vorgesehene Gewinde eingeschraubt und daraufhin nach einem Umschalten der Schalteinheit von der Entkopplungsstellung in die Kopplungsstellung durch die mittels des Gewindetriebs erzeugten und über die Kopplungseinheit auf die Werkzeugaufnahme übertragenen Zugkräfte gesetzt. Die Steuereinheit kann auch dazu vorgesehen sein, die durchgeführten Betriebsvorgänge zu archivieren, sodass eine Protokollierung der durchgeführten Arbeiten zuverlässig erfolgen kann.

Die Sensoreinheit kann dabei dazu ausgebildet sein, den Verstellweg, die Zieh- oder Presskräfte, das Drehmoment oder dergleichen zu überwachen, welches für die Durchführung der Arbeitsvorgänge und deren erfolgreichen Abschluss erforderlich ist. Ferner kann die Sensoreinheit beispielsweise die Kupplung überwachen und für den Fall einer fehlerhaften Verbindung der Werkzeugeinheit mit der Antriebseinheit eine Warnung oder Fehlermeldung auf einem bevorzugt vorgesehenen Display anzeigen. Das Display ermöglicht es dem Bedienpersonal zudem besonders einfach, die handhaltbare Zug- und Druckvorrichtung zu bedienen. Diese kann darüber hinaus auch über geeignete drahtlose Übertragungsmittel mit einer zentralen Datenbank oder einem mobilen Handgerät, zum Beispiel einem Smartphone oder einem Tablet verbunden werden.

Die Erfindung löst die Aufgabe ferner durch ein modulares System für eine vorstehend beschriebene erfindungsgemäße oder weitergebildete, handhaltbare Zug- und Druckvorrichtung, mit mindestens zwei zur Erzeugung unterschiedlicher Zug- und Drucckräfte ausgelegten Werkzeugeinheiten und mindestens einer jeweils mit den Werkzeugeinheiten verbindbaren Antriebseinheit.

Die Werkzeugeinheiten unterscheiden sich durch bevorzugt durch ihre für bestimmte Arbeitsabläufe optimierte Auslegung, insbesondere in Bezug auf das Gewicht, die Abmessungen oder die Ergonomie der Werkzeugeinheit. Beispielsweise weisen die Gewindespindeln der Werkzeugeinheiten unterschiedlicher Steigungen auf oder die Werkzeugeinheiten sind einstückig mit unterschiedlichen Werkzeugen verbunden, wodurch ein Wechsel der Werkzeuge nicht möglich ist.

Das erfindungsgemäße System ermöglicht es, die handhaltbare Zug- und Druckvorrichtung für eine Vielzahl unterschiedlicher Arbeitsgänge einzusetzen und unterschiedliche Werkzeugeinheiten mit einer Antriebseinheit zu betreiben. Hierdurch wird ein stetig erweiterbares System für die handhaltbare Zug- und Druckvorrichtung bereitgestellt, bei welchem die Antriebseinheit nachhaltig genutzt und dennoch unterschiedliche Arbeitsfelder gegeben sind.

Ein Ausführungsbeispiel der Erfindung wird nachstehend mit Bezug auf die Zeichnungen erläutert. In den Zeichnungen zeigen:
- Fig. 1: in einer perspektivischen Ansicht eine schematische Darstellung einer Zugund Druckvorrichtung mit einer Werkzeugeinheit und einer von der Werkzeugeinheit getrennten Antriebseinheit;
- Fig. 2: in einer Schnittansicht eine schematische Darstellung der Zug- und Druckvorrichtung von Fig. 1 und
- Fig. 3: in einer Schnittansicht eine schematische Darstellung der Zug- und Druckvorrichtung von Fig. 1 und 2 mit der Werkzeugeinheit und der über eine Kupplung mit der Werkzeugeinheit verbundenen Antriebseinheit.

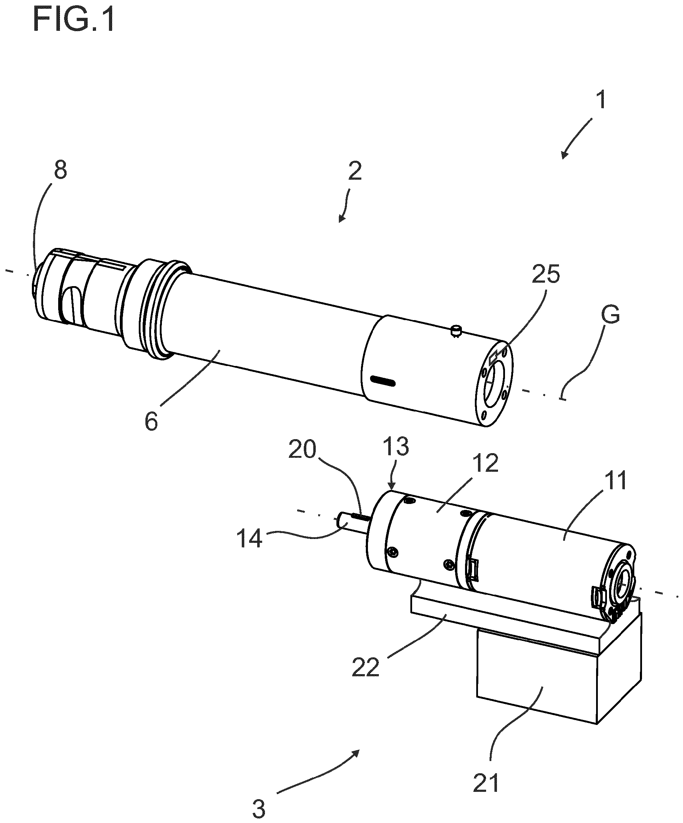

Figur 1 zeigt in einer perspektivischen Ansicht eine Zug- und Druckvorrichtung 1 mit einer Werkzeugeinheit 2 und einer von dieser getrennten Antriebseinheit 3.

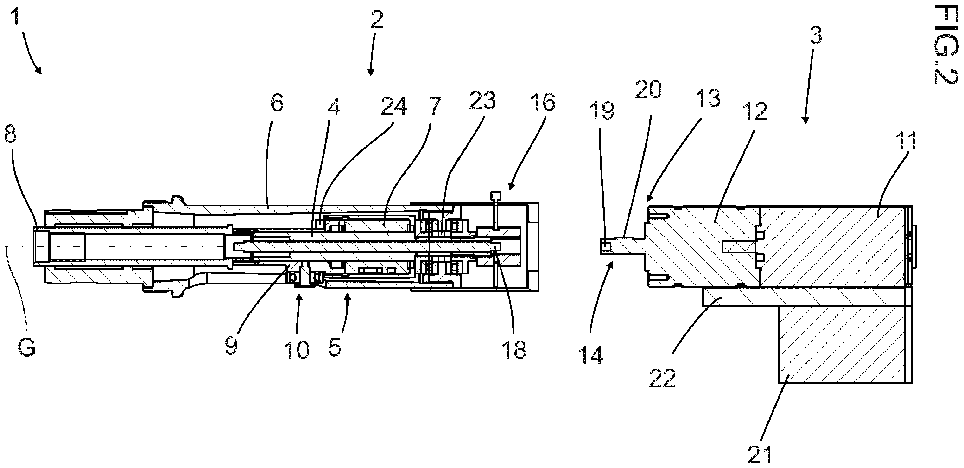

Die Werkzeugeinheit 2 weist eine mit der Antriebseinheit 3 verbindbare Gewindespindel 4 eines Gewindetriebs 5 auf, wobei die Gewindespindel 4 drehbar an einem Gehäusekörper 6 der Werkzeugeinheit 2 gelagert ist (vgl. Figur 2).

Der Gewindetrieb 5 weist neben der Gewindespindel 4 eine auf der Gewindespindel 4 angeordnete Gewindemutter 7 auf, welche verdrehfest an dem Gehäusekörper 6 gelagert ist. Die Gewindemutter 7 dient zum Antrieb einer als Kolbenstange 8 ausgebildeten Werkzeugaufnahme, welche in Längsachsenrichtung der Gewindespindel 4, d.h. in Richtung der Gewindespindelachse G, verstellbar gelagert ist. Die Kolbenstange 8 ist mit der Gewindemutter 7 über eine lösbar verbundene Kopplungseinheit 9 verbunden.

Zur verdrehsicheren Lagerung der Gewindemutter 7 an dem Gehäusekörper 6 dient eine Lagereinheit 10, welche an der Kopplungseinheit 9 angebracht ist.

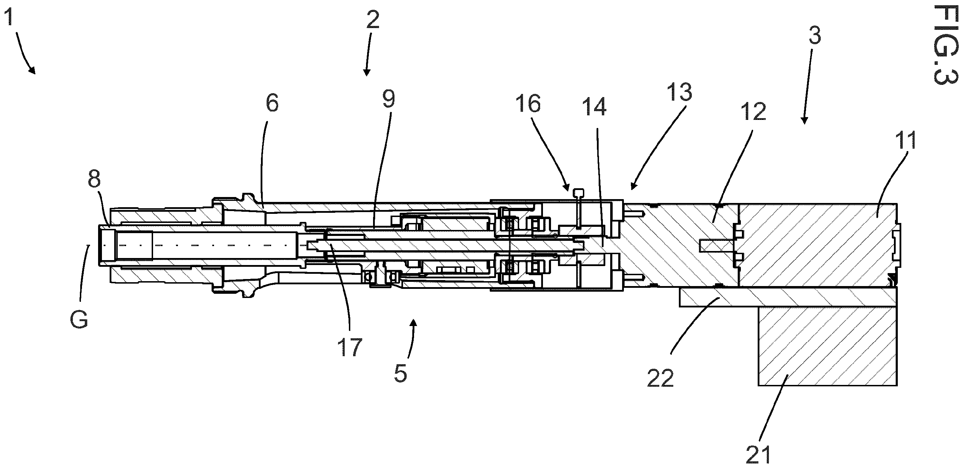

Die Antriebseinheit 3 weist einen Elektromotor 11 und ein an den Elektromotor 11 angeschlossenes Getriebe 12 mit einer Antriebswelle 14 auf. Die Antriebseinheit 3 ist über eine Kupplung 13 mit der Werkzeugeinheit 2 verbindbar. Die Kupplung 13 ist zwischen einer in Fig. 1 und 2 dargestellten Entriegelungsstellung und einer in Figur 3 dargestellten Verriegelungsstellung verstellbar. Ferner weist die Kupplung eine Datenleitung zur Übertragung von Signalen zwischen der Werkzeugeinheit 2 und eine Steuereinheit 22 der Antriebseinheit 3 sowie eine Stromversorgung für die Werkzeugeinheit 2 auf.

Die Werkzeugeinheit 2 weist darüber hinaus eine Schalteinheit 16 zum Koppeln und Entkoppeln des Gewindetriebs 5 von der Antriebseinheit 3 auf. Die Schalteinheit 13 ist zwischen einer die Gewindespindel 4 mit der Antriebseinheit 3 verbindenden, in Fig. 3 exemplarisch dargestellten Kopplungsstellung und einer die Gewindespindel 4 von der Antriebseinheit 3 trennenden Entkopplungsstellung verstellbar.

Die Gewindespindel ist in diesem Ausführungsbeispiel als Hohlspindel 4 zur Aufnahme einer mit dem Elektromotor 3 verbundenen Rotationswelle 17 ausgebildet. Die Rotationswelle 17 ist derart mit der Antriebseinheit 3 verbindbar, dass die Rotationswelle 17 unabhängig von der in der Kopplungsstellung oder in Entkopplungsstellung angeordneten Schalteinheit 16 drehbar ist. Darüber hinaus ist die Rotationswelle 17 koaxial zu der Hohlspindel 6 angeordnet.

Die Rotationswelle 17 weist einen mit einem an der Antriebswelle 14 angeordneten Koppelabschnitt 19 in Eingriff bringbaren ersten Kopplungsabschnitt 18 auf. Der erste Kopplungsabschnitt 18 und der Koppelabschnitt 19 sind derart ausgebildet, dass in der Verriegelungsstellung der Kupplung ein Formschluss zwischen der Rotationswelle 17 und der Antriebseinheit 3 in Umfangsrichtung der Längsachse der Gewindespindelachse G erzeugt ist. Ferner ist die Schalteinheit 16 formschlüssig über einen als eine Passfeder ausgebildeten zweiten Kopplungsabschnitt 20 mit der Antriebswelle 14 der Antriebseinheit 3 verbunden (vgl. Fig.3).

Ferner weist die Antriebseinheit 3 einen Akku 21 zum Betreiben des Elektromotors 11 und die Steuereinheit 22 zur Steuerung und/oder Archivierung der Betriebsvorgänge auf. Die Steuereinheit 22 ist mit einem Rotationssensor 23 zur Erfassung des Drehmoments der Antriebseinheit 3 sowie einem Kraftsensor 24 zur Erfassung der Zug- und Druckkräfte der Werkzeugeinheit 2 verbunden. Ferner ist die Steuereinheit 22 mit einem Kontaktsensor 25 zur Überprüfung der Verbindung der Werkzeugeinheit 2 mit der Antriebseinheit 3 durch die Kupplung 13 verbunden. Der Elektromotor 11, der Akku 21 und die Steuereinheit 22 sind in einem über die Kupplung 13 mit dem Gehäusekörper 6 der Werkzeugeinheit 2 verbindbaren, nicht dargestellten, Grundkörper angeordnet.

Ein nichtdargestelltes System für die handhaltbare Zug- und Druckvorrichtung 1 weist mindestens zwei zur Erzeugung unterschiedlicher Zug- und Druckkräfte ausgelegte Werkzeugeinheiten 2 und mindestens eine jeweils mit den Werkzeugeinheiten 2 verbindbare Antriebseinheit 3 auf.

Alle in Verbindung mit einzelnen Ausführungsformen der Erfindung erläuterten Merkmale können in unterschiedlicher Kombination für die handhaltbare Zug- und Druckvorrichtung oder das modulare System vorgesehen sein, um deren vorteilhafte Wirkungen zu realisieren, auch wenn diese zu unterschiedlichen Ausführungsformen beschrieben worden sind. Beispielsweise ist die Kupplung 13 zur Verbindung der Antriebseinheit 3 mit der Werkzeugeinheit 2 als elektrische Schnellkupplung ausgebildet, welche über die Steuereinheit 22 elektrisch zwischen der Verriegelungsstellung und der Entriegelungsstellung verstellbar ist.

### Bezugszeichenliste

- 1: Zug- und Druckvorrichtung
- 2: Werkzeugeinheit
- 3: Antriebseinheit
- 4: Gewindespindel (Hohlspindel)
- 5: Gewindetrieb
- 6: Gehäusekörpers
- 7: Gewindemutter
- 8: Werkzeugaufnahme (Kolbenstange)
- 9: Kopplungseinheit
- 10: Lagereinheit
- 11: Elektromotor
- 12: Getriebe
- 13: Kupplung
- 14: Antriebswelle
- 16: Schalteinheit
- 17: Rotationswelle
- 18: erster Kopplungsabschnitt
- 19: Koppelabschnitt
- 20: zweiten Kopplungsabschnitt (Passfeder)
- 21: Akku
- 22: Steuereinheit
- 23: Rotationssensor
- 24: Kraftsensor
- 25: Kontaktsensor
- G: Gewindespindelachse

## Patentansprüche

1. Handhaltbare Zug- und Druckvorrichtung zum Antrieb von Zieh- und Presswerkzeugen, mit
- einer Werkzeugeinheit (2), aufweisend
- einen Gewindetrieb (5) mit einer verdrehbar an einem Gehäusekörper (6) gelagerten Gewindespindel (4) und einer verdrehbar auf der Gewindespindel (4) und über eine Lagereinheit (10) verdrehfest an dem Gehäusekörper (6) gelagerten Gewindemutter (7), und
- einer mit einer Werkzeugaufnahme (8) verbundenen Kopplungseinheit (11) zur Übertragung von aus der Drehrichtung der Gewindespindel (4) resultierenden Zug- und Druckkräften von der Gewindemutter (7) auf die Werkzeugaufnahme (8), und
- einer über eine Kupplung (13) mit der Werkzeugeinheit (2) verbindbaren Antriebseinheit (3) mit einem akkubetriebenen Elektromotor (11) zum Antrieb der Gewindespindel (4).

2. Handhaltbare Zug- und Druckvorrichtung nach Anspruch 1, **dadurch gekennzeichnet, dass** die Kupplung (13) eine Datenleitung und eine Stromversorgung aufweist.

3. Handhaltbare Zug- und Druckvorrichtung nach Anspruch 1 oder 2, **dadurch gekennzeichnet, dass** die Kupplung (13) zur Verbindung der Antriebseinheit (3) mit der Werkzeugeinheit (2) als elektrische und/oder mechanische Kupplung (13) ausgebildet ist.

4. Handhaltbare Zug- und Druckvorrichtung nach mindestens einem der vorhergehenden Ansprüche, **dadurch gekennzeichnet, dass** die Kupplung (13) als Schnellkupplung ausgebildet ist.

5. Handhaltbare Zug- und Druckvorrichtung nach mindestens einem der vorhergehenden Ansprüche, **dadurch gekennzeichnet, dass** die Werkzeugeinheit (2) eine zwischen einer die Gewindespindel (4) mit der Antriebseinheit (3) verbindenden Kopplungsstellung und einer die Gewindespindel (4) von der Antriebseinheit (3) trennenden Entkopplungsstellung verstellbare Schalteinheit (16) aufweist.

6. Handhaltbare Zug- und Druckvorrichtung nach mindestens einem der vorhergehenden Ansprüche, **dadurch gekennzeichnet, dass** die Gewindespindel (4) und/oder die Schalteinheit (16) zur formschlüssigen Verbindung mit einer Antriebswelle (14) der Antriebseinheit (3) ausgebildet ist.

7. Handhaltbare Zug- und Druckvorrichtung nach mindestens einem der vorhergehenden Ansprüche, **dadurch gekennzeichnet, dass** die Gewindespindel als Hohlspindel (4) zur Aufnahme einer mit der Antriebseinheit (3) verbindbaren Rotationswelle (17) ausgebildet ist.

8. Modulares System für eine handhaltbaren Zug- und Druckvorrichtung nach mindestens einem der vorhergehenden Ansprüche, mit
- mindestens zwei zur Erzeugung unterschiedlicher Zug- und Druckkräfte ausgelegten Werkzeugeinheiten (2) und
- mindestens einer jeweils mit den Werkzeugeinheiten (2) verbindbaren Antriebseinheit (3).
